# EUROPÄISCHE PATENTSCHRIFT

(11) **EP 1 632 124 B1**
(45) Veröffentlichungstag und Bekanntmachung des Hinweises auf die Patenterteilung: **14.11.2012**
(21) Anmeldenummer: 05015950.8
(22) Anmeldetag: 22.07.2005
(51) Int. Cl.: A01D 41/14

(54) **Schneidwerk für Erntemaschinen**
Cutting device for harvester
Appareil de coupe pour dispositif de récolte

(30) Priorität: 07.09.2004 DE 102004043613
(43) Veröffentlichungstag der Anmeldung: 08.03.2006
(73) Patentinhaber: CLAAS Selbstfahrende Erntemaschinen GmbH, 33428 Harsewinkel (DE)
(72) Erfinder: Bürmann, Dominik, 33415 Verl (DE)

(56) Entgegenhaltungen:
- WO-A-98/53660
- DE-A1- 3 512 619
- DE-A1- 3 534 763
- GB-A- 2 103 063
- US-A- 4 910 946

## Beschreibung

Die Erfindungen betrifft ein Schneidwerk für eine selbstfahrende Erntemaschine, vorzugsweise einen Mähdrescher gemäß dem Oberbegriff des Anspruchs 1.

In der EP 0 789 990 ist ein Schneidwerk für einen Mähdrescher offenbart, bei dem die Antriebselemente für die Mähbalkenabschnitte, die Haspel und die Einzugsschnecke in einem außen an der Seitenwand des Schneidtischs angeordneten Gehäuse untergebracht sind. Im vorderen Bereich der Seitenwand ist ein Halmteiler an dem Schneidtisch angeordnet. Das Gehäuse weist in einem vorderen Bereich annähernd die Breite des Halmteilers auf, im Bereich des Mähbalkenantriebs nimmt die Breite des Gehäuses keilförmig zu und verläuft anschließend im hinteren Bereich des Schneidtischs in der erreichten Breite parallel zur Seitenwand.

Nachteilig bei diesem bekannten Schneidwerk ist, dass die Anordnung der Mähbalkenantriebe eine breite Gestaltung des Gehäuses erfordert. Der außen über den Halmteiler ragende Teil des Gehäuses drückt den Bestand nach außen weg, wodurch die Pflanzen zu boden gedrückt werden bzw. sich durch das unbeabsichtigte Bewegen des Bestandes Erntegutkörner von den Pflanzen lösen und las sogenannter Rieselverlust verloren gehen.

Ein Schneidwerk nach dem Oberbegriff von Anspruch 1 ist aus WO 9853660 bekannt.

Der Erfindung liegt daher die Aufgabe zugrunde, ein Schneidwerk zu schaffen, das die Nachteile des Standes der Technik vermeidet und bei dem durch eine bauraumsparende Anordnung des Mähmesserantriebs unter Beibehaltung der Schnittbreite eine schmale Bauweise des Halmteilers ermöglicht wird, so dass weniger Erntegut durch den Halmteiler in Richtung Boden gedrückt wird.

Diese Aufgabe wird erfindungsgemäß durch die kennzeichnenden Merkmale des Anspruchs 1 gelöst. Weitere vorteilhafte Wirkungen des Erfindungsgegenstandes ergeben sich aus den Unteransprüchen.

Indem die Arbeitsbreite des Schneidorgans im Wesentlichen der Breite des Schneidwerks entspricht, wird sichergestellt, dass das Schneidwerk nur geringe seitliche Ausladungen aufweist. Dies hat insbesondere den Vorteil, dass der das Schneidwerk umgebende Bestand weniger intensiv auf den Boden gedrückt wird, so dass sich die Rieselverluste erheblich reduzieren.

Dadurch, dass das Schneidwerk einen Scheidtisch mit wenigstens zwei Seitenwänden aufweist, wobei zumindest die dem Schneidorgan zugeordnete Seitenwand einen Versatz aufweist, kann der Halmteiler bei gleichzeitiger Vergrößerung der Schnittbreite schmaler ausgeführt werden.

Der Versatz ist als Gutleitelement ausgebildet, so dass das Erntegut zur Mitte des Schneidtischs umgelenkt wird und die Gleitbewegung des Emteguts in diese Richtung unterstützt wird.

Indem der Antrieb des wenigstens einen Schneidorgans oberhalb des Schneidorgans und im wesentlichen innerhalb der Arbeitsbreite des Schneidorgans angeordnet ist, kann der Halmteiler vorteilhafterweise schmaler ausgeführt werden.

In einer vorteilhaften Ausgestaltung der Erfindung weist die Seitenwand ein vorderes Seitenwandelement und ein hinteres Seitenwandelement auf, wobei das vordere Seitenwandelement die Schnittbreite und das hintere Seitenwandelement eine Einzugsbreite begrenzt und der Versatz die Seitenwand von der Schnittbreite auf die Einzugsbreite einschnürt, so dass der Erntegutstrom durch die Seitenwand zusammengeführt wird.

Dadurch, dass das Schneidorgan als Mähbalkenabschnitt ausgeführt ist und im vorderen Bereich des Schneidtischs angeordnet ist, wobei der Versatz im Bereich des Mähbalkenabschnitts angeordnet ist, kann der Mähmesserantrieb in unmittelbarer Nähe des Mähbalkenabschnitts untergebracht werden und den Mähbalkenabschnitt direkt ohne weitere zwischengeschaltetete Antriebselemente antreiben.

In einer vorteilhaften Ausgestaltung der Erfindung weist der Schneidtisch eine Schneidwerksmulde auf und oberhalb der Schneidwerksmulde ist eine Einzugsschnecke angeordnet, wobei der Versatz in Richtung der Einzugsschnecke geneigt ist, so dass das von Mähbalken abgeschnittene Erntegut schonend zusammengeführt wird und dabei in Richtung der Schneidwerksmulde fällt.

In einer weiteren vorteilhaften Ausgestaltung der Erfindung ist der Antrieb an der Außenseite der Seitenwand in einer Umhäusung angeordnet und die Umhäusung weist im Bereich des vorderen Seitenwandelement eine erste Breite und im Bereich des hinteren Seitenwandelements eine zweite Breite auf, wobei die zweite Breite größer als die erste Breite ist, so dass die Umhäusung zum einen auf die Größe und Anordnung des Antriebs angepasst ist und zum anderen zumindest im Bereich des Halmteilers so schmal wie möglich baut.

In einer vorteilhaften Weiterbildung der Erfindung ist die Umhäusung mit einer Abdeckung verschließbar, die parallel zur Fahrtrichtung der Erntemaschine verläuft und im frontseitigen Bereich der Umhäusung eine Halmteilerspitze an dem Schneidtisch angeordnet ist, die annähernd bündig mit dem vorderen Seitenwand und der Abdeckung abschließt und dabei innerhalb der Verlängerungslinien des vorderen Seitenwandelements und der Abdeckung liegt, so dass die Umhäusung zusammen mit der Halmteilerspitze einen Halmteiler ergibt, der das Erntegut nur im Bereich der Halmteilerspitze umlenkt.

Es zeigen:
- Fig.1: den vorderen Teil einer Draufsicht eines schematisch dargestellten Mähdreschers mit einem erfindungsgemäßen Schneidwerk,
- Fig.2: eine perspektivische Ansicht eines erfindungsgemäßen Schneidwerks.

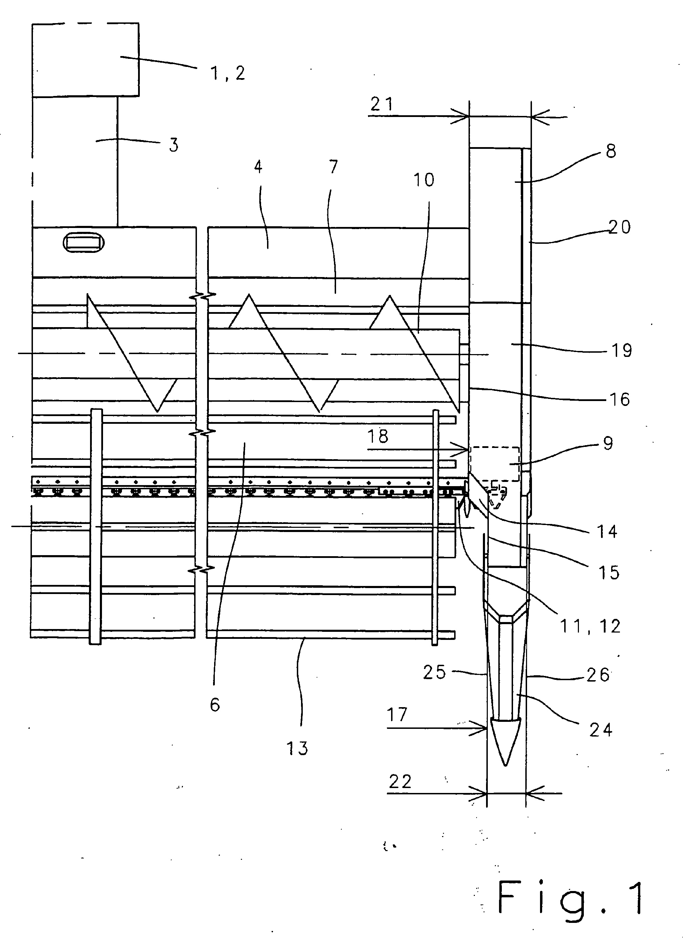

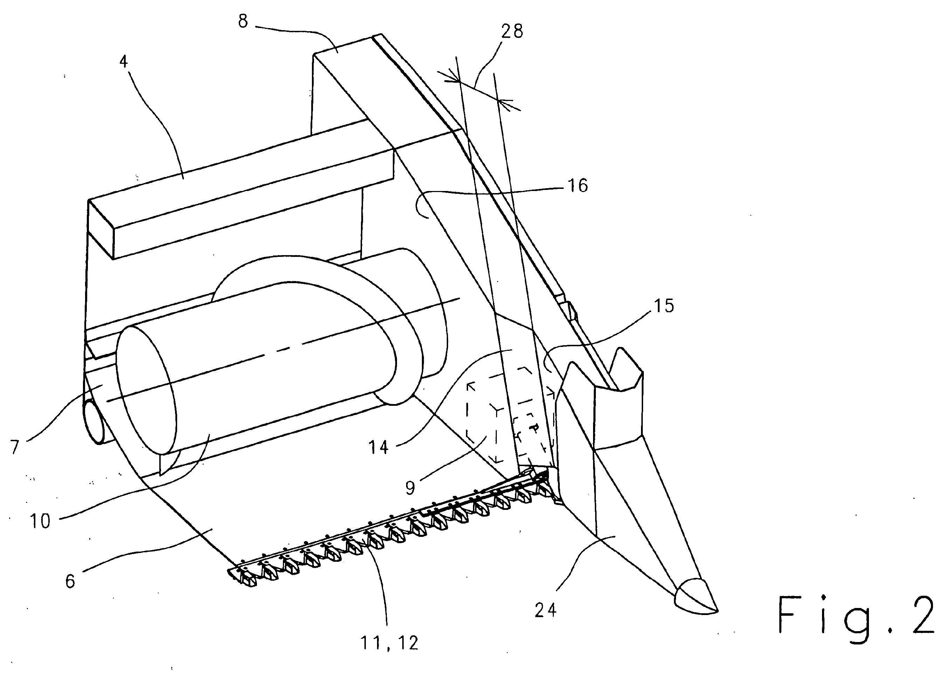

In der Fig.1 ist teilweise die Draufsicht einer als selbstfahrender Mähdrescher 1 ausgeführten, landwirtschaftlichen Erntemaschine 2 dargestellt, an deren Schrägförderer 3 ein Schneidwerk 4 angeordnet ist. Das Schneidwerk 4 besteht im wesentlichen aus einem Schneidtisch 6 mit einer Schneidwerksmulde 7, der an beiden Enden jeweils mit einer Seitenwand 8 versehen ist. Oberhalb der Schneidwerksmulde 7 ist annähernd bündig zwischen den Seitenwänden 8 eine rotierend angetriebenen Einzugsschnecke 10 angeordnet. Das Erntegut wird von zwei im vorderen Bereich des Schneidwerks 6 angeordneten, als oszillierend angetriebene Mähbalkenabschnitte 12 ausgeführten Schneidorganen 11 abgeschnitten und anschließend der Einzugsschnecke 10 zugeführt, die das Erntegut zu dem Schrägförderer 3 befördert. Es liegt im Rahmen der Erfindung, dass dem Schneidwerk 6 auch nur ein einziger Mähbalkenabschnitt 12 zugeordnet sein kann. Oberhalb des Schneidtischs 6 ist vor der Einzugsschnecke 10 eine rotierend angetriebene, höhenverstellbare Haspel 13 angeordnet, mit der das Erntegut über die Mähbalkenabschnitte 12 in Richtung der Schneidwerksmulde 7 umgelenkt wird. Die nachfolgende Beschreibung bezieht sich auf eine Hälfte des symmetrisch aufgebauten Schneidwerks 4.
Die Seitenwand 8 weist im Bereich des Mähbalkenabschnitts 12 einen als Gutleitelement ausgebildeten Versatz 14 auf, der ein vorderes Seitenwandelement 15 der Seitenwand 8 und ein dazu seitlich nach innen versetztes hinteres Seitenwandelement 16 der Seitenwand 8 miteinander verbindet. Sowohl das vordere Seitenwandelement 15 als auch das hintere Seitenwandelement 16 verlaufen parallel zur Fahrtrichtung des Mähdreschers 1.
Das vordere Seitenwandelement 15 begrenzt eine Arbeitsbreite 17 des Schneidwerks 4, in der das Erntegut vom Feld geerntet wird. Der Versatz 14 verläuft von dem vorderen Seitenwandelement 15 schräg nach innen bis zu dem hinteren Seitenwandelement 16, so dass die Arbeitsbreite 17 auf eine Einzugbreite 18 eingeschnürt wird, welche von den hinteren Seitenwandelementen 16 begrenzt wird. Das von den Mähbalkenabschnitten 12 abgeschnittene Erntegut wird somit durch den Versatz 14 auf die Einzugsbreite 18 zusammengeführt.
An der Außenseite der Seitenwand 8 des Schneidtischs 6 ist eine Umhäusung 19 angeordnet, die mit einer Abdeckung 20 verschlossen ist auf, wobei die Abdeckung 20 ebenfalls parallel zu Fahrtrichtung des Mähdreschers 1 verläuft. Innerhalb der Umhäusung 19 ist unter anderem der Antrieb 9 für den Mähbalkenabschnitt 12 angeordnet. Durch den Versatz 14 weist die Umhäusung 19 im Bereich der vorderen Seitenwand 15 eine erste Breite 21 und im Bereich der hinteren Seitenwand 15 eine zweite Breite 22, die größer als die erste Breite 21 ist, so dass der Antrieb 9 erfindungsgemäß im wesentlichen innerhalb der Arbeitsbreite 17 des Schneidorgans 11 und wie aus Fig.2 ersichtlich oberhalb des Schneidorgans 11 platzsparend in unmittelbarer Nähe zum Schneidorgan 11 angeordnet werden kann. Im frontseitigen Bereich der Umhäusung 19 ist eine Halmteilerspitze 24 an dem Schneidtisch 6 angeordnet, die annähernd bündig mit dem vorderen Seitenwandelement 15 und der Abdeckung 20 abschließt und dabei innerhalb der Verlängerungslinien 25, 26 des vorderen Seitenwandelements 15 und der Abdeckung 20 liegt.

Fig.2 zeigt eine perspektivische Ansicht des erfindungsgemäßen Schneidwerks 4. Der Versatz 14 ist in Richtung der Einzugsschnecke 10 geneigt und erstreckt sich über die gesamte Seitenwand 8, wobei er annähernd eine konstante Breite 28 aufweist. Das vordere Seitenwandelement 15 ist überwiegend im Bereich vor dem Mähbalkenabschnitt 12 und teilweise oberhalb des Mähbalkenabschnitts 12 angeordnet, während das hintere Seitenwandelement 16 ausschließlich hinter dem Mähbalkenabschnitt 12 angeordnet ist.

Es liegt im Rahmen des Könnens eines Fachmannes die beschriebenen Ausführungsbeispiele in nicht dargestellter Weise abzuwandeln oder in anderen Maschinensystemen einzusetzen, um die beschriebenen Effekte zu erzielen, ohne dabei den Rahmen der Erfindung zu verlassen.

### Bezugszeichenliste:

- 1: Mähdrescher
- 2: Landwirtschaftliche Erntemaschine
- 3: Schrägförderer
- 4: Schneidwerk
- 6: Schneidtisch
- 7: Schneidwerksmulde
- 8: Seitenwand
- 9: Mähmesserantrieb
- 10: Einzugsschnecke
- 11: Schneidorgan
- 12: Mähbalkenabschnitt
- 13: Haspel
- 14: Versatz
- 15: vorderes Seitenwandelement
- 16: hinteres Seitenwandelement
- 17: Arbeitsbreite
- 18: Einzugsbreite
- 19: Umhäusung
- 20: Abdeckung
- 21: Erste Breite
- 22: Zweite Breite
- 24: Halmteiler
- 25: Verlängerungslinie
- 26: Verlängerungslinie
- 28: Breite

## Patentansprüche

1. Schneidwerk (4) für eine selbstfahrende Erntemaschine (2) mit wenigstens einem von einem Antrieb (9) angetriebenen Schneidorgan (11), wobei das Schneidorgan (11) das Erntegut in einer Arbeitsbreite (17) vom Feld schneidet, wobei die Arbeitsbreite (17) des Schneidorgans (11) im wesentlichen der Breite des Schneldwerks (4) entspricht und das Schneidwerk (4) einen Schneidtisch (6) mit wenigstens zwei Seitenwänden (8) aufweist und zumindest die dem Schneidorgan (6) zugeordnete Seitenwand (8) einen Versatz (14) aufweist,
**dadurch gekennzeichnet, dass**
der Versatz (14) als Gutleitelement ausgebildet ist.

2. Schneidwerk (4) nach Anspruch 1,
**dadurch gekennzeichnet,**
**dass** der Antrieb (9) des wenigstens einen Schneidorgans (11) oberhalb des Schneidorgans (11) und im wesentlichen innerhalb der Arbeitsbreite (17) des Schneidorgans (11) angeordnet ist.

3. Schneidwerk (4) nach wenigstens einem der vorhergehenden Ansprüche,
**dadurch gekennzeichnet,**
**dass** die Seitenwand (8) ein vorderes Seltenwandelement (15) und ein hinteres Seitenwandelement (16) aufweiset, wobei das vordere Seitenwandelement (15) die Arbeitsbreite (17) des Schneidorgans (12) und das hintere Seitenwandelement (16) eine Einzugsbreite (18) des Schneidtischs (6) begrenzt und der Versatz (14) die Seitenwand (8) von der Arbeitsbreite (17) auf die Einzugsbreite (18) einschnürt.

4. Schneidwerk (4) nach wenigstens einem der vorhergehenden Ansprüche,
**dadurch gekennzeichnet,**
**dass** das Schneidorgan (12) als Mähbalkenabschnitt (11) ausgeführt ist und Im vorderen Bereich des Schneidtischs (6) angeordnet ist, wobei der Versatz (14) im Bereich des Mähbalkenabschnitts (11) angeordnet ist.

5. Schneidwerk (4) nach wenigstens einem der vorhergehenden Ansprüche
**dadurch gekennzeichnet, dass**
der Schneidtisch (6) eine Schneidwerksmulde (7) aufweist und oberhalb der Schneidwerksmulde (7) eine Einzugsschnecke (10) angeordnet ist, wobei der Versatz (14) In Richtung der Einzugsschnecke (10) geneigt ist.

6. Schneidwerk (4) nach wenigstens einem der vorhergehenden Ansprüche,
**dadurch gekennzeichnet, dass**
der Antrieb (9) an der Außenseite der Seitenwand (8) in einer Umhäusung (19) angeordnet ist und die Umhäusung (19) durch den Versatz (14) im Bereich des vorderen Seitenwandelemente (15) eine erste Breite (21) und zumindest im Bereich des hinteren Seitenwandelementes (16) eine zweite Breite (22) aufweist, wobei die zweite Breite (22) größter als die erste Breite (21) ist.

7. Schneidwerk (4) nach wenigstens einem der vorhergehenden Ansprüche,
**dadurch gekennzeichnet, dass**
die Umhäusung (19) mit einer Abdeckung (20) verschließbar ist, die parallel zur Fahrtrichtung der Erntemaschine verläuft und im frontseitigen Bereich der Umhäusung eine Halmtellerspitze (23) an dem Schneidtisch (6) angeordnet ist, die annähernd bündig mit dem vorderen. Seltenwandelement (15) und der Abdeckung (20) abschließt und innerhalb der Verlängerungslinien (25, 26) des vorderen Seitenwandelements (15) und der Abdeckung (20) liegt.

## Claims

1. A cutting mechanism (4) for a self-propelled harvester (2) comprising at least one cutting member (11) driven by a drive (9), wherein the cutting member (11) cuts the crop material in a working width (17) from the field, wherein the working width (17) of the cutting member (11) substantially corresponds to the width of the cutting mechanism (4) and the cutting mechanism (4) has a cutting table (6) with at least two side walls (8) and at least the side wall (8) associated with the cutting member (6) has an offset (14),
**characterised in that**
the offset (14) is in the form of a material guide element.

2. A cutting mechanism (4) according to claim 1 **characterised in that** the drive (9) of the at least one cutting member (11) is arranged above the cutting member (11) and substantially within the working width (17) of the cutting member (11).

3. A cutting mechanism (4) according to at least one of the preceding claims **characterised in that** the side wall (8) has a front side wall element (15) and a rear side wall element (16), wherein the front side wall element (15) defines the working width (17) of the cutting member (12) and the rear side wall element (16) defines an intake width (18) of the cutting table (6) and the offset (14) reduces the side wall (8) from the working width (17) to the intake width (18).

4. A cutting mechanism (4) according to at least one of the preceding claims **characterised in that** the cutting member (12) is in the form of a mowing bar portion (11) and is arranged in the front region of the cutting table (6), the offset (14) being arranged in the region of the mowing bar portion (11).

5. A cutting mechanism (4) according to at least one of the preceding claims **characterised in that** the cutting table (6) has a cutting mechanism trough (7) and an intake auger (10) is arranged above the cutting mechanism trough (7), the offset (14) being inclined in the direction of the intake auger (10).

6. A cutting mechanism (4) according to at least one of the preceding claims **characterised in that** the drive (9) is arranged at the outside of the side wall (8) in a casing (19) and the casing (19) due to the offset (14) is of a first width (21) in the region of the front side wall element (15) and a second width (22) at least in the region of the rear side wall element (16), the second width (22) being greater than the first width (21).

7. A cutting mechanism (4) according to at least one of the preceding claims **characterised in that** the casing (19) can be closed with a cover (20) which extends parallel to the direction of travel of the harvester and arranged on the cutting table (6) in the front-side region of the casing is a stalk divider tip (23) which terminates approximately flush with the front side wall element (15) and the cover (20) and is disposed within the lines of extension (25, 26) of the front side wall element (15) and the cover (20).

## Revendications

1. Tablier de coupe (4) pour une machine de récolte automotrice (2) comportant an moins un organe de coupe (11) entraîné par un entraînement (9), l'organe de coupe (11) coupant le produit de récolte du champ sur une largeur de travail (17), la largeur de travail (17) de l'organe de coupe (11) correspondant sensiblement à la largeur du tablier de coupe (4) et le tablier de coupe (4) présentant une table de coupe (6) avec au moins deux parois latérales (8), et au moins la paroi latérale (8) associée à l'organe de coupe (6) présentant un décrochement (14), **caractérisé en ce que** le décrochement (14) est réalisé sous la forme d'un élément de guidage de produit.

2. Tablier de coupe (4) selon la revendication 1, **caractérisé en ce que** l'entraînement (9) dudit au moins un organe de coupe (11) est disposé au-dessus de l'organe de coupe (11) et sensiblement à l'intérieur de la largeur de travail (17) de l'organe de coupe (11).

3. Tablier de coupe (4) selon au moins une des revendications précédentes, **caractérisé en ce que** la paroi latérale (8) présente un élément de paroi latérale avant (15) et un élément de paroi latérale arrière (16), l'élément de paroi latérale avant (15) limitant la largeur de travail (17) de l'organe de coupe (12) et l'élément de paroi latérale arrière (16) limitant une largeur d'alimentation (18) de la table de coupe (6), et le décrochement (14) causant un rétrécissement de la paroi latérale (8) de la largeur de travail (17) à la largeur d'alimentation (18).

4. Tablier de coupe (4) selon au moins une des revendications précédentes, **caractérisé en ce que** l'organe de coupe (12) est réalisé sous la forme d'une section de barre de coupe (11) et est disposé dans la partie avant de la table de coupe (6), le décrochement (14) étant disposé dans la région de la section de barre de coupe (11).

5. Tablier de coupe (4) selon au moins une des revendications précédentes, **caractérisé en ce que** la table de coupe (6) présente un auget de tablier de coupe (7) et une vis d'alimentation (10) est disposée au-dessus de l'auget de tablier de coupe (7), le décrochement (14) étant incliné en direction de la vis d'alimentation (10).

6. Tablier de coupe (4) selon au moins une des revendications précédentes, **caractérisé en ce que** l'entraînement (9) est disposé du côté extérieur de la paroi latérale (8) dans un carter (19) et le carter (19) présente, du fait du décrochement (14), une première largeur (21) dans la région de l'élément de paroi latérale avant (15) et une deuxième largeur (22) au moins dans la région de l'élément de paroi latérale arrière (16), la deuxième largeur (22) étant supérieure à la première largeur (21).

7. Tablier de coupe (4) selon au moins une des revendications précédentes, **caractérisé en ce que** le carter (19) peut être fermé par un capot (20) qui s'étend parallèlement à la direction de marche de la machine de récolte, et **en ce qu'**une pointe de diviseur (23) est disposée sur la table de coupe (6) dans la partie avant du carter et se termine approximativement à fleur de l'élément de paroi latérale avant (15) et du capot (20) et se situe à l'intérieur des lignes de prolongement (25, 26) de l'élément de paroi latérale avant (15) et du capot (20).
